Europäisches Patentamt

(19) **European Patent Office**

**Office européen des brevets**

(11) Numéro de publication: **0 100 733**
**B1**

(12) **FASCICULE DE BREVET EUROPÉEN**

(45) Date de publication du fascicule du brevet:
**08.04.87**

(21) Numéro de dépôt: **83401576.0**

(22) Date de dépôt: **29.07.83**

(51) Int. Cl.⁴: **F 16 B 7/04, E 06 B 3/96**

(54) Dispositif d'assemblage selon un angle quelconque, notamment pour profilés creux.

(30) Priorité: **02.08.82 FR 8213459**

(43) Date de publication de la demande:
**15.02.84 Bulletin 84/7**

(45) Mention de la délivrance du brevet:
**08.04.87 Bulletin 87/15**

(84) Etats contractants désignés:
**BE CH DE GB IT LI LU NL**

(56) Documents cité:
**EP-A-0 064 001**
**DE-A-2 502 634**
**FR-A-2 238 383**
**FR-A-2 378 971**
**GB-A-1 204 404**
**US-A-2 994 414**
**US-A-3 388 936**

(73) Titulaire: **TECHNAL- FRANCE, 270 rue Léon Joulin,
F-31027 Toulouse Cedex (FR)**

(72) Inventeur: **Job, Claude, 322, Chemin de Caillabat,
F-31120 Labarthe- sur- Lèze (FR)**

(74) Mandataire: **Martin, Jean- Jacques, Cabinet
REGIMBEAU 26, Avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un dispositif d'assemblage de deux profilés, notamment deux profilés métalliques.

Ce dispositif permet de former un assemblage d'angle par rapprochement et mise en butée de deux profilés préalablement coupés d'onglet, c'est-à-dire coupés en biseau de telle sorte que la ligne de coupe constitue la bissectrice d'un angle d'assemblage de valeur quelconque, aigu ou obtus.

Les profilés creux peuvent être du type dit "tubulaire" (à section fermée) ou du type dit "quasi tubulaire" (à section ouverte).

Il a été notamment proposé dans EP-A- 0 064 001, publié le 3 novembre 1982, au nom de TECHNAL FRANCE, un dispositif permettant de réaliser de tels assemblages selon des angles quelconques. Dans ce dispositif, deux tirants, chacun relié à l'un des deux profilés à rapprocher, sont réunis et articulés au moyen d'une biellette placée à l'intérieur d'un noyau en forme de chape. Cette chape est insérée à l'intérieur des profilés en position de chevauchement, le plan de coupe coïncidant alors avec un plan de symétrie de la chape. Au cours des opérations d'assemblage, la chape est retenue en place par un double contact avec les deux faces intérieures des profilés, du côté de l'angle de raccordement et du côté opposé, respectivement.

Cet agencement assure un positionnement parfaitement symétrique de l'ensemble chape-biellette-tirants. Mais, par le fait même, cette symétrie impose une excellente précision de la coupe d'onglet et surtout des perçages définissant l'accrochage des tirants aux profilés (les orifices recevant un pion rétractable solidaire du tirant).

Par ailleurs, le volume de la chape, qui occupe toute la largeur de la cavité des profilés, ainsi que la course limitée de la biellette (cette limitation étant inhérente à l'épaisseur des parois de la chape) limitent l'angle maximal de l'assemblage à des valeurs de l'ordre de 150°. Au-delà, la transformation du mouvement de la biellette dans la chape, en direction du sommet de l'assemblage, en un mouvement transversal de traction sur les tirants est peu efficace. La composante transversale de traction devient en effet de plus en plus réduite au fur et à mesure que l'angle s'aplatit, et l'assemblage manque de solidité. Les angles les plus obtus sont ainsi les plus pénalisants.

Pour remédier à ces inconvénients, la présente demande propose un dispositif du type comportant:
- un premier élément formant noyau d'assemblage susceptible de coopérer avec les faces intérieures des profilés, du côté opposé au sommet de l'angle de raccordement, selon deux arêtes d'appui,
- un second élément,
- des moyens de serrage pour assurer la translation relative du second élément par rapport au noyau en direction du sommet de l'assemblage,
- deux tirants disposés symétriquement de part et d'autre du second élément, relié par une liaison articulée et comportant, à l'autre extrémité, des moyens d'accrochage aux profilés.

Un dispositif correspondant à cette définition est par exemple décrit dans le US-A-2 994 414. Ce dispositif ne permet cependant l'assemblage de profilés que selon un angle donné (généralement 90°), en n'autorisant que de très faibles variations de l'angle de coupe autour de cette valeur.

Selon l'invention, le second élément est agencé en forme de biellette à laquelle sont reliés par l'une de leurs extrémités, chacun des tirants, et les moyens de serrage, qui sont reliés à l'un des éléments, coopèrent avec une surface de pression de l'autre élément, pour exercer sur cette surface une pression de nature à provoquer l'écartement des deux éléments, en autorisant un décalage transversal des plans de symétrie de ceux-ci.

Les moyens de serrage comportent de préférence une vis de pression engagée dans un trou taraudé formé dans l'élément auquel ces moyens sont reliés.

Cet agencement autorise ainsi un jeu latéral dans une direction perpendiculaire au plan bissecteur de l'assemblage. Ce degré de liberté supplémentaire par rapport au dispositif antérieur, où le seul jeu permis était un jeu au pivotement de la biellette par rapport à la chape, permet un meilleur rattrapage des erreurs de perçage et d'usinage.

Par ailleurs, la course de la biellette au cours du serrage est allongée de façon appréciable; l'amélioration consécutive du serrage permet de réaliser des assemblages robustes même pour les angles très obtus.

Avantageusement, chaque tirant est relié, à son extrémité opposée à l'articulation de la biellette, à des moyens d'accrochage formant coulisseau par une liaison articulée. Ces coulisseaux peuvent supporter un organe de liaison au profilé, notamment un pion rétractable coopérant avec un perçage homologue du profilé, et comporter deux surfaces coopérant chacune avec les faces intérieures du profilé situé du côté de l'angle de raccordement et du côté opposé, respectivement, la liaison articulée au tirant étant alors située à proximité de la surface du coulisseau coopérant avec la face du profilé située du côté opposé à l'angle de raccordement.

Cette disposition permet, quel que soit l'angle, une trajectoire de chaque coulisseau -trajectoire allongée du fait de l'accroissement de course-parfaitement parallèle à l'axe du profilé.

Pour permettre un serrage indifféremment par l'extérieur ou par l'intérieur de l'assemblage, la biellette et le noyau comportent chacun un trou taraudé susceptible de recevoir, alternativement et indifféremment, la vis de pression introduite d'un côté de l'autre du sommet. Des moyens sont alors prévus pour empêcher l'introduction de la vis dans l'autre trou taraudé, par exemple un épaulement formé au pied de la vis de pression.

Lorsque le serrage est effectué par l'extérieur, la vis est introduite dans le trou taraudé de la biellette et exerce sa pression sur la surface du noyau, et inversement lorsque le serrage est effectué par l'intérieur.

D'autres caractéristiques et avantages de l'invention apparaîtront à la lecture de la description détaillée ci-dessous, faite en référence aux dessins annexés, sur lesquels:

- la figure 1 est une vue perspective de l'ensemble du dispositif avant assemblage;
- la figure 2 est une vue, partiellement en coupe, de l'ensemble du dispositif une fois assemblé;
- la figure 3 illustre une variante de réalisation de l'ensemble de la figure 2.

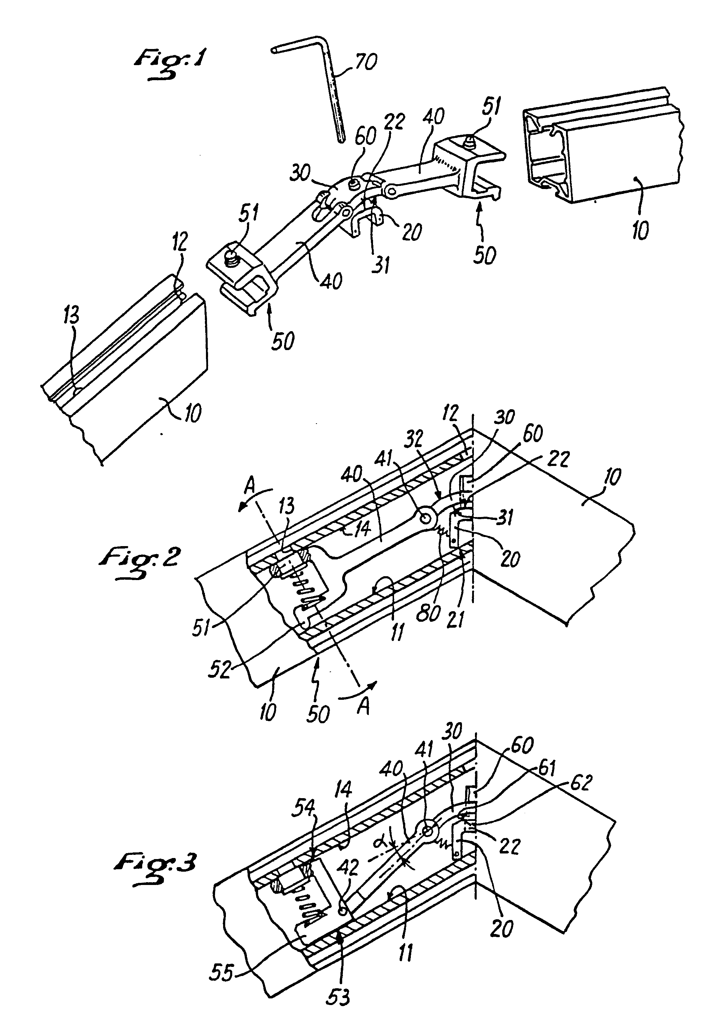

En se référant à la figure 1, les deux profilés 10 ont été coupés d'onglet en vue de leur assemblage par le dispositif de l'invention. Celui-ci comporte un noyau d'assemblage 20 en forme de U inversé, une biellette 30 assurant une liaison articulée entre deux tirants 40 pourvus de moyens d'accrochage 50 à l'une de leurs extrémités, par exemple comportant des pions rétractables 51 prévus pour se loger dans des perçages 13 pratiqués dans chacun des profilés.

Une vis de pression 60 est introduite dans un trou taraudé de la biellette et appuie sur une surface de pression 22 du noyau. La vis de pression 60 est par exemple une vis à six pans creux, qui sera serrée par une clé 70 introduite dans un perçage 12 pratiqué au sommet de l'assemblage.

Bien que les figures représentent un dispositif dans lequel la vis 60 est introduite dans un trou de la biellette et appuie sur une surface du noyau, il est également possible de prévoir la disposition inverse, c'est-à-dire que la vis est introduite dans un trou taraudé pratiqué dans le noyau et exerce la pression sur la surface intérieure 31 de la biellette; le serrage se fait alors non plus par l'extérieur de l'assemblage, mais par l'intérieur de celui-ci.

La figure 2 montre de façon plus détaillée la structure précédente: le noyau 20 comporte deux arêtes d'appui et de pivotement 21 constituées par les extrémités des branches du U retourné. Ces deux arêtes sont destinées à venir en chevauchement des deux profilés 10 pour permettre le rapprochement et le serrage de ceux-ci. La surface de pression 22 a de préférence une forme courbe, tournant sa convexité vers le sommet de l'angle de raccordement.

De même, la surface inférieure 31 de la biellette 30 (qui peut éventuellement jouer le rôle de surface de pression) a une forme courbe dont la convexité est tournée vers le sommet de l'angle de raccordement. Il est avantageux de donner également à la surface supérieure 32 de la biellette une forme courbe homologue pour améliorer la logeabilité de l'ensemble.

Avantageusement, la biellette 30 et le noyau 20 sont reliés par des moyens de liaison élastique, par exemple constitués de deux ressorts tels que 80 dont l'une des extrémités est fixée à la biellette au voisinage de l'articulation 41 avec le tirant, et l'autre extrémité fixée au noyau au voisinage de l'arête de l'appui 21.

Sur la figure 2, les moyens d'accrochage 50 ont été représentés avec un pion rétractable 51 coopérant avec un logement 13 pratiqué dans la face 14 du profilé, et une surface d'appui 52 coopérant avec la face opposée 11.

Pour des angles très obtus, ce type de moyen d'accrochage a cependant l'inconvénient, en raison de l'allongement de la course de la biellette permise par la nouvelle structure de l'invention, de provoquer un léger pivotement du tirant (schématisé par les flèches A) amenant à un léger décalage angulaire entre l'axe du perçage 13 et l'axe du pion rétractable 51.

Pour remédier à cet inconvénient, on peut utiliser par exemple des moyens d'accrochage tels que ceux représentés sur la figure 3: à l'extrémité opposée à l'articulation 41, le tirant 40 comporte une seconde articulation 42 au moyen d'accrochage 55 en forme de coulisseau. Ce coulisseau 55 possède deux faces 53 et 54 coopérant chacune avec les faces intérieures 11 et 14, respectivement, du profilé. Cette disposition assure une trajectoire du coulisseau au moment du serrage parfaitement parallèle à la direction du profilé. Avantageusement, l'articulation 42 est située à proximité de la surface 53 coopérant avec la face du profilé situé du côté intérieur: cette disposition permet de maintenir, même pour des angles très obtus, un angle α entre l'axe du tirant et l'axe du profilé augmentant la composante de traction.

La figure 3 illustre également une variante (utilisable indépendamment des moyens d'accrochage choisis) rendant le dispositif réversible, c'est-à-dire autorisant son montage par l'extérieur de l'assemblage (comme représenté) ou bien par l'intérieur: le noyau 20 comporte également un trou 22 taraudé avec les mêmes caractéristiques que le trou de la biellette 30; la vis de pression peut être alors indifféremment introduite dans le trou de la biellette (serrage par l'extérieur) ou dans celui du noyau (serrage par l'intérieur), la vis exerçant alors sa pression sur l'élément opposé. Pour empêcher l'introduction de la vis dans l'autre trou taraudé, celle-ci comporte un épaulement 61 formé au voisinage de son pied: c'est par cet épaulement que s'exercera la pression de la vis. La vis peut également comporter un pointeau 62 pour faciliter le centrage dans le trou taraudé.

## Revendications

1. Dispositif d'assemblage de deux profilés creux (10) coupés d'onglet, susceptible d'être contenu à l'intérieur des cavités des deux profilés, du type comportant:

- un premier élément formant noyau d'assemblage (20) susceptible de coopérer avec les faces intérieures (11) des profilés, du côté opposé au sommet de l'angle de raccordement, selon deux arêtes (21) d'appui,
- un second élément (30),
- des moyens de serrage (60), pour assurer la translation relative du second élément par rapport au noyau en direction du sommet de l'assemblage,
- deux tirants (40) disposés symétriquement de part et d'autre du second élément, reliés par une liaison articulée (41) et comportant, à l'autre extrémité, des moyens d'accrochage (50) aux profilés,

caractérisé en ce que le second élément est agencé en forme de biellette (30) à laquelle sont reliés, par l'une de leurs extrémités, chacun des tirants (40), et en ce que les moyens de serrage (60), qui sont reliés à l'un des éléments, coopèrent avec une surface de pression (22) de l'autre élément (20), pour exercer sur cette surface une pression de nature à provoquer l'écartement des deux éléments, en autorisant un décalage transversal des plans de symétrie de ceux-ci.

2. Dispositif selon la revendication 1, caractérisé en ce que les moyens de serrage comportent une vis de pression (60) engagée dans un trou taraudé formé dans l'élément auquel ces moyens sont reliés.

3. Dispositif selon l'une des revendications 1 et 2, caractérisé en ce que la surface de pression tourne sa convexité vers le sommet de l'angle de raccordement.

4. Dispositif selon l'une des revendications 1 à 3, caractérisé en ce que la surface (31) de l'élément auquel sont reliés les moyens de serrage, et située en regard de la surface de pression, a une forme tournant sa convexité vers le sommet de l'angle de raccordement.

5. Dispositif selon l'une des revendications 1 à 4, caractérisé en ce qu'il comporte en outre des moyens de liaison élastique (80) du noyau et de la biellette.

6. Dispositif selon la revendication 5, caractérisé en ce que les moyens de liaison élastique comportent deux éléments de traction, chacun de ces éléments ayant une extrémité fixée à la biellette au voisinage de la liaison articulée avec le tirant, et l'autre extrémité fixée au noyau au voisinage de l'arête d'appui.

7. Dispositif selon l'une des revendications 1 à 6, caractérisé en ce que chaque tirant est relié, à son extrémité opposée à l'articulation à la biellette, aux moyens d'accrochage par une liaison articulée (42).

8. Dispositif selon la revendication 7, caractérisé en ce que les moyens d'accrochage supportent un organe de liaison au profilé, notamment un pion rétractable (51) coopérant avec un perçage homologue (13) du profilé, et comportent deux surfaces (54, 53) coopérant chacune avec les faces intérieures du profilé situé du côté de l'angle de raccordement (14) et du côté opposé (11), respectivement, et en ce que la liaison articulée au tirant est située à proximité de la surface (53) coopérant avec la face du profilé situé du côté opposé à l'angle de raccordement.

9. Dispositif selon l'une des revendications 2 à 8, caractérisé en ce que la biellette et le noyau d'assemblage comportent chacun un trou taraudé, de manière que l'un ou l'autre trou taraudé puisse recevoir la vis de pression introduite du côté du sommet de l'angle de raccordement ou du côté opposé, respectivement, des moyens étant alors prévus pour empêcher l'introduction de la vis dans l'autre trou taraudé.

## Patentansprüche

1. Vorrichtung zum Zusammenbau von zwei auf Gehrung geschnittenen Hohlprofilen (10), die in das Innere der Profile eingebracht wird und folgende Teile umfasst:

- ein erstes ein Kernstück (20) bildendes Teil, das entlang zweier Stützkanten (21) mit der Innenseite (11) der Profile auf der der Spitze des Verbindungswinkels gegenüberliegenden Seite zusammenwirkt,
- ein zweites Teil (30),
- Spannmittel (60), um die Verschiebung des zweiten Teiles gegenüber dem Kernstück in Richtung auf die Spitze des Verbindungswinkels sicherzustellen,
- zwei Schenkel (40), die symmetrisch zu beiden Seiten des zweiten Teiles angeordnet und über eine Gelenkverbindung (41) miteinander verbunden sind und am anderen Ende eine Halterung (50) zur Befestigung an den Hohlprofilen tragen,

dadurch gekennzeichnet, dass das zweite Teil als Verbindungsstück (30) ausgebildet ist, an dem jeder der Schenkel (40) mit einem seiner Enden angelenkt ist, und dadurch, dass die Spannmittel (60), die mit einem der beiden Teile verbunden sind, auf eine Druckfläche (22) des anderen Teiles (20) wirken, um auf diese Fläche einen Druck auszuüben, so dass die beiden Teile auseinander gedrückt werden, wodurch eine Querverlagerung ihrer Symmetrieebenen ermöglicht wird.

2. Vorrichtung nach Anspruch 1, dadurch gekennzeichnet, dass die Spannmittel eine Druckschraube (60) umfassen, die mit einem Innengewinde in dem Teil zusammenwirkt, mit dem diese Mittel verbunden sind.

3. Vorrichtung nach einem der Ansprüche 1 und 2, dadurch gekennzeichnet, dass die Wölbung der Druckfläche der Spitze des Verbindungswinkels zugewendet ist.

4. Vorrichtung nach einem der Ansprüche 1 bis 3, dadurch gekennzeichnet, dass die Fläche (31) des Teiles, mit dem die Spannmittel verbunden sind, und die gegenüber der Druckfläche angeordnet ist, eine Form hat, deren Wölbung der Spitze des Verbindungswinkels zugewendet ist.

5. Vorrichtung nach einem der Ansprüche 1 bis 4, dadurch gekennzeichnet, dass sie ausserdem mit elastischen Verbindungsteilen (80) zwischen Kernstück und Verbindungsstück versehen ist.

6. Vorrichtung nach Anspruch 5, dadurch gekennzeichnet, dass die elastischen Verbindungsteile aus zwei Zugelementen bestehen, die je mit einem Ende am Verbindungsstück in der Nähe der Anlenkung des Schenkels und mit dem anderen Ende am Kernstück in der Nähe der Stützkante befestigt sind.

7. Vorrichtung nach einem der Ansprüche 1 bis 6, dadurch gekennzeichnet, dass jeder Schenkel an seinem der Verbindungsstelle mit dem Verbindungsstück abgewendeten Ende mit den Halterungen durch eine Gelenkverbindung (42) verbunden ist.

8. Vorrichtung nach Anspruch 7, dadurch gekennzeichnet, dass die Halterungen eine Haltevorrichtung zur Verbindung mit den Hohlprofilen tragen, insbesondere einen federnd gelagerten Stift (51), der mit einem entsprechenden Loch (13) im Profil zusammenwirkt, und zwei Flächen (54, 53) umfassen, von denen die eine mit der im Verbindungswinkel (14) gelegenen Innenseite des Profiles und die andere mit der gegenüberliegenden Innenseite des Profiles zusammenwirkt, und dadurch, dass die Gelenkverbindung mit dem Schenkel in der Nähe der Fläche (53) angeordnet ist, die mit der dem Verbindungswinkel gegenüberliegenden Innenseite des Profiles zusammenwirkt.

9. Vorrichtung nach einem der Ansprüche 2 bis 8, dadurch gekennzeichnet, dass das Verbindungsstück und das Kernstück jeweils eine Gewindebohrung aufweisen, so dass die eine oder die andere Gewindebohrung die Druckschraube aufnehmen kann, die entweder von der Seite des Verbindungswinkels oder von der entgegengesetzten Seite her eingesetzt wird, wobei Mittel vorgesehen sind, die das Einsetzen der Schraube in die andere Gewindebohrung verhindern.

## Claims

1. Device for assembling two hollow profile members (10) cut to a mitre, adapted to be contained within cavities in the two profile members, of the type comprising
   - a first element forming an assembly core (20) adapted to cooperate with the inner faces (11) of the profile members on the side opposite the apex of the angle of connection, according to two bearing edges (21),
   - a second element (30),
   - clamping means (60), to ensure relative translation of the second element with reference to the core in the direction of the apex of the assembly,
   - two tie rods (40) disposed symmetrically on either side of the second element, linked by an articulated connection (41) and comprising, at the other end, means of attachment (50) to the profile members, characterised in that the second element is made in the form of a connecting rod (36) to which each of the tie rods (40) is connected by one of its ends, and in that the clamping means (60) which are connected to one of the elements, cooperate with a pressure surface (22) on the other element (20), to exert on this surface a pressure such as will cause the separation of the two elements, while permitting a transverse offset of the planes of symmetry of them.

2. Device according to claim 1, characterised in that the clamping means comprise a pressure screw (60) engaged in a screw-threaded hole formed in the element to which these means are connected.

3. Device according to one of claims 1 and 2, characterised in that the pressure surface turns its convex face towards the apex of the connecting angle.

4. Device according to one of claims 1 to 3, characterised in that the surface (31) of the element to which the clamping means are connected, and situated so as to face the pressure surface, has a shape such that its convexity is towards the apex of the connecting angle.

5. Device according to one of claims 1 to 4, characterised in that it also comprises means for the elastic connection (80) of the core and the connecting rod.

6. Device according to claim 5, characterised in that the elastic connecting means comprise two traction elements, each of these elements having one end fixed to the connecting rod in the vicinity of the articulated connection with the tie rod, and the other end fixed to the core in the vicinity of the bearing edge.

7. Device according to one of claims 1 to 6, characterised in that each tie rod is linked, at its end opposite the articulation to the connecting rod, to the attachment means by an articulated connection (42).

8. Device according to claim 7, characterised in that the attachment means support a member for connection to the profile member, in particular a retractable stud (51) cooperating with a corresponding bore (13) in the profile member, and comprising two surfaces (54,53) each cooperating with the inner faces of the profile member situated on the side of the connecting angle (14) and on the side opposite (11), respectively, and in that the connection articulated on the tie rod is situated close to the surface (53) cooperating with the face of the profile member situated on the side opposite the angle of connection.

9. Device according to one of claims 2 to 8, characterised in that the connecting rod and the assembly core each comprise a screw-threaded hole, so that one or other screw-threaded hole can receive the pressure screw introduced from the side of the apex of the connection angle or from the opposite side, respectively, some means then being provided to prevent the introduction of the screw into the other screw-threaded hole.

Fig.1

Fig.2

Fig.3